# FASCICULE DE BREVET EUROPEEN

(11) **EP 3 140 030 B1**
(45) Date de publication et mention de la délivrance du brevet: **31.01.2018**
(21) Numéro de dépôt: 15723660.5
(22) Date de dépôt: 05.05.2015
(51) Int. Cl.: B01J 8/00

(54) **DISPOSITIF POUR ALIMENTER OU SOUTIRER EN CONTINU UN PROCEDE SOUS PRESSION EN SOLIDES DIVISES**
VORRICHTUNG ZUR DURCHGEHENDEN ZUFUHR VON GETEILTEN FESTSTOFFEN AN EIN VERFAHREN UNTER DRUCK ODER ZUR KONTINUIERLICHEN EXTRAKTION VON GETEILTEN FESTSTOFFEN AUS DIESEM VERFAHREN
DEVICE FOR CONTINUOUSLY FEEDING DIVIDED SOLIDS TO A PRESSURISED PROCESS OR FOR CONTINUOUSLY EXTRACTING DIVIDED SOLIDS FROM SAID PROCESS

(30) Priorité: 07.05.2014 FR 1454135
(43) Date de publication de la demande: 15.03.2017
(73) Titulaire: Commissariat à l'Énergie Atomique et aux Énergies Alternatives, 75015 Paris (FR)
(72) Inventeur: RUIZ, Jean Christophe, F-30290 Laudun l'Ardoise (FR); TURC, Hubert-Alexandre, F-30133 Les Angles (FR); CHARTON, Frédéric, F-30200 Bagnols sur Ceze (FR)
(74) Mandataire: Brevalex
(86) Numéro de dépôt international: PCT/EP2015/059783
(87) Numéro de publication internationale: WO 2015/169779

(56) Documents cités:
- WO-A1-2012/082026
- FR-A2- 2 466 277
- US-A- 2 448 272

## Description

Le sujet de l'invention présente est un dispositif pour alimenter ou soutirer en continu un procédé sous pression en solides divisés.

Il peut s'appliquer à des procédés de traitement sous pression voire très haute pression pouvant concerner, par exemple, le traitement de déchets par méthode hydrothermale, l'élaboration de matériaux, ou la décontamination de matériaux, le fluide du procédé pouvant être liquide ou gazeux. Les dimensions des solides divisés ne sont pas critiques pour le procédé de l'invention, mais plusieurs procédés industriels considérés ici recourent à des solides de taille millimétrique. Dans l'application des procédés de traitement de déchets, les solides peuvent être réduits à des tailles nettement submillimétriques, ou bien éliminés. Enfin, les solides peuvent être secs à l'origine, ou au contraire déjà mêlés à un fluide, qui est alors à basse pression.

La mise sous pression d'un fluide est classiquement assurée au moyen de pompes, mais les solides divisés sont susceptibles de les endommager ou de les rendre inutilisables, par érosion, abrasion ou colmatage, et les pompes les plus robustes à l'égard de ces phénomènes sont souvent celles qui ne permettent pas les élévations de pressions les plus importantes. Il est donc difficile de trouver des pompes convenant à la pressurisation en continu de solides divisés en suspension dans un milieu fluide jusqu'à des pressions élevées, malgré le grand nombre de modèles disponibles; de nombreuses pompes doivent même travailler avec des fluides purs, les solides qui peuvent les charger étant arrêtés par des filtres d'entrée. On peut mentionner particulièrement que l'élévation de pression est maintenue en général par des clapets anti-retour, qui sont animés de mouvements alternatifs, mais très sensibles aux rayures produites par les corps solides.

Les mélanges fluide-solide non pompables devant être mis sous pression doivent alors être traités en mode discontinu par lots, ce qui conduit à des insuffisances d'optimisation technique et économique, les réacteurs où le traitement est accompli étant soumis à des cycles comprenant des phases d'arrêts puis de remise en conditions opératoires entre chaque lot, ce qui est très coûteux en temps, en énergie et en rendement dans les procédés industriels. A l'échelle des laboratoires, ces inconvénients de mise en oeuvre des réactions d'intérêt dans des procédés discontinus (batch) sont moins graves, mais les résultats sont difficilement extrapolables dans bien des cas, par exemple dans des études de synthèse, réaction ou dégradation de matériaux, quand la durée des cycles d'élévation de pression et de détente implique des temps significativement supérieurs à la durée des phénomènes observés pendant le maintien de la pression. WO2012/082026 décrit un système de remplissage avec vis sans fin. La présente invention concerne un dispositif pour alimenter un fluide sous pression en solides divisés, qui soit compatible avec un traitement continu du fluide chargé. Les solides divisés peuvent être ajoutés à l'état sec (biomasse sèche ou humide, particules minérales, etc.), ou déjà présents dans un fluide particulier comme un liquide (charges minérales, fibres organiques, etc.). Le procédé de traitement peut être à plusieurs centaines de bars. La continuité du procédé permet d'économiser de l'énergie, en évitant de recourir à des reprises et des arrêts de cycles périodiques. Quand le traitement permet de récupérer de l'énergie mécanique, une partie de celle-ci peut être consacrée à l'entretien du mouvement du dispositif de l'invention, ce qui améliore la continuité du processus. La conception de dispositif peut être adaptée entre la taille de laboratoire et la taille industrielle.

La présente invention permet également de collecter et dépressuriser en continu des particules solides issues du procédé sous pression selon le même principe de réalisation que l'alimentation qui est essentiellement décrite dans ce document. Ces particules peuvent être par exemple des matériaux élaborés dans le procédé sous pression en amont, le cas d'un procédé de synthèse ; elles peuvent être des résidus de matière organique non traitée dans le cas de procédés de gazéification hydrothermale, de matière minérale non valorisable dans le cas de lixiviation hydrothermale, de précipités minéraux non resolubilisés dans le cas de procédés d'oxydation hydrothermale. Les solides peuvent être de taille submillimétrique, millimétrique, ou supérieure. Un avantage général du dispositif est qu'il est simple et peu coûteux; il peut aussi être intégré facilement à des réacteurs sous pression.

Sous une forme générale, l'invention concerne un dispositif pour alimenter ou soutirer en continu un fluide sous pression contenant des solides divisés, comprenant un tube, un train de pistons, reliés entre eux par une chaîne et coulissant dans le tube de façon étanche, le tube comprenant des alimentations du fluide réparties d'une entrée du tube à une portion centrale du tube et échelonnées à des pressions croissantes vers la portion centrale, une alimentation des solides divisés en suspension ou non dans un fluide compressible ou non à l'entrée du tube, et un circuit d'écoulement du fluide sous pression, le circuit d'écoulement passant à travers le tube à la portion centrale en y débouchant par une alimentation d'écoulement et une évacuation d'écoulement communiquant entre elles quand le train de pistons est présent dans le tube, l'évacuation d'écoulement étant aussi une évacuation des solides divisés.

L'effet technique principal réalisé est que le fluide injecté dans le tube et recevant les solides divisés est séparé en plusieurs chambres délimitées par les pistons, qui sont soumises à des élévations de pression successives par les alimentations supplémentaires, à mesure que le fluide est avancé vers le centre du tube. A cet endroit, l'écoulement du fluide de traitement et déjà sous pression traverse le tube et entraîne avec lui les particules solides. En sortie du tube, il reste seulement du fluide pur, qui est détendu en continuant à avancer et peut ensuite être évacué et recyclé.

Les différents aspects, caractéristiques et avantages de l'invention seront maintenant décrits en détail, au moyen des figures suivantes :
- la figure 1 est une vue d'une première réalisation de l'invention ;
- la figure 2, une vue d'une deuxième réalisation de l'invention ; et
- les figures 3, 4, 5 et 6 illustrent différents dispositifs d'application de l'invention, pour des procédés en continu.

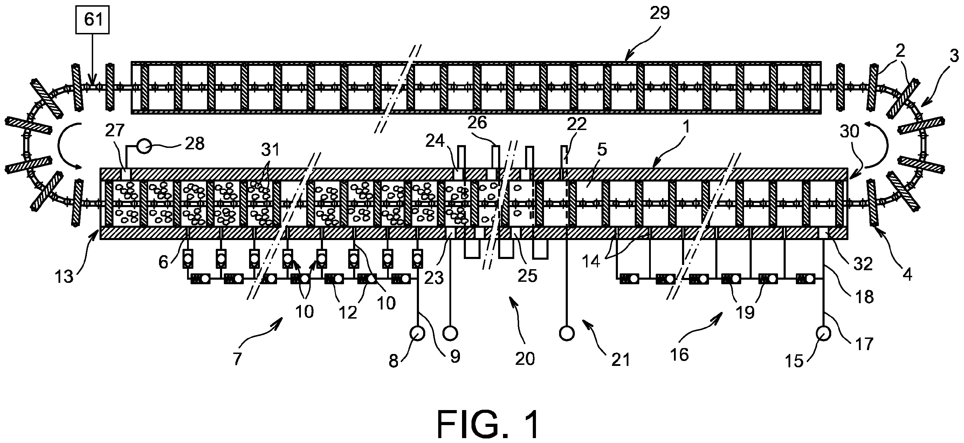

Le dispositif de la figure 1 comprend un tube 1 rectiligne et un train de pistons 2 attachés avec un pas uniforme à une chaîne 3 en boucle sans fin passant par le tube 1. Le diamètre des pistons 2 est choisi un peu inférieur à l'alésage du tube 1, afin de leur permettre d'y coulisser. Le bord des pistons 2 porte un système d'étanchéité simple à joint 4 frottant contre la paroi interne du tube 1 et créant une étanchéité dynamique à l'intérieur du tube. L'étanchéité recherchée est à la fois statique car elle repose sur une barrière physique (contact entre les pistons 2, les joints 4 et l'alésage du tube 1) et dynamique car elle est maintenue malgré le glissement des pistons 2 dans l'alésage du tube 1 et le frottement des joints 4 sur l'alésage. Une chambre 5 étanche est ainsi établie dans le tube 1 entre chaque paire de pistons 2 consécutifs. Ce dispositif vise à augmenter graduellement la pression dans chaque chambre 5 de la pression d'alimentation à la pression opératoire, par l'injection contrôlée de fluide via les piquages 6. Il vise également à dépressuriser graduellement chaque chambre 5 par les évents 14 de la pression d'alimentation à la pression de décharge.

Dans ce qui suit, un mode de réalisation est proposé. Le joint 4 peut être un joint simple tel qu'un joint torique, ce qui est rendu possible par la caractéristique essentielle de l'invention qu'une étanchéité à haute pression est obtenue par une succession d'étanchéités à basse pression différentielle.

Le dispositif comprend encore un certain nombre de piquages d'alimentation 6 en fluide, qui sont les extrémités d'un réseau de distribution 7 du fluide, joignant les piquages d'alimentation 6 à une alimentation 8 de fluide à haute pression. Le réseau de distribution 7 comprend une canalisation principale 9, partant de l'alimentation 8 en fluide sous pression, et des embranchements 10 parallèles entre eux et reliant chacun la canalisation principale 9 à un des piquages d'alimentation 6. Les embranchements 10 sont chacun munis d'un clapet anti-retour 11, qui interdit la circulation de fluide vers la canalisation principale 9 ; et la canalisation principale 9 est munie de clapets tarés 12, qui sont des détendeurs abaissant successivement la pression du fluide, de façon échelonnée, à mesure qu'il avance dans la canalisation principale 9. Un des clapets tarés 12 est établi entre chaque paire d'embranchements 10 de sorte que les pressions du fluide parcourant les embranchements 10 sont toutes différentes, et plus précisément décroissantes pour des piquages 6 plus proches d'une entrée 13 du tube 1, par laquelle entrent les pistons 2 pendant l'exploitation de l'appareil.

Des piquages d'évent 14 sont disposés à travers le tube 1 à une région éloignée de l'entrée 13, et ils servent d'exutoire au fluide. Ils aboutissent à une recette 15 de récupération du fluide, à basse pression ou pression atmosphérique, et lui sont reliés par un réseau d'évacuation 16, qui, à l'instar du précédent, comprend une canalisation principale 17, munie d'embranchements 18 qui la relient respectivement aux piquages d'évent 14. De même, des clapets tarés 19 s'étendent sur la canalisation principale 17, entre chaque paire d'embranchements 18. Les clapets tarés 19 sont des détendeurs qui permettent de diminuer successivement et de façon échelonnée la pression du fluide vers la recette 15, avec la conséquence que le fluide peut s'écouler par les piquages d'évent 14 à des pressions différentes, et plus précisément décroissantes vers une sortie 30 du tube 1, qui est opposée à l'entrée 13. Les piquages d'alimentation 6 et d'évent 14 sont échelonnés à des distances régulières et égales, et les pistons 2 sont éloignés les uns des autres des mêmes distances sur la chaîne 3, ce qui fait qu'un seul des piquages 6 et 14 débouche dans chacune des chambres 5.

Le tube 1 comprend une portion centrale 20, où sont absents les piquages d'alimentation 6 et d'évent 14. On trouve toutefois des connexions à un circuit d'écoulement 21 de fluide, qui entre dans le tube 1 par un piquage d'alimentation d'écoulement 22 et en ressort par un piquage d'évacuation d'écoulement 23, plus proche de l'entrée 13 ; des piquages supérieurs 24 et des piquages inférieurs 25 sont prévus entre eux, chacun des piquages supérieurs 24 étant relié à un piquage inférieur 25 respectif, par un conduit 26, qui autorise au fluide une circulation de dérivation à côté du tube 1. Enfin, le tube 1 comprend encore un piquage d'alimentation en produits solides 27, disposé près de l'entrée 13, et qui est relié à un réservoir de produits solides 28. Ce dernier piquage 27 est représenté en haut du tube 1, afin d'exploiter la gravité pour alimenter l'appareil en produits solides, mais aucune position ni orientation des piquages sur le tube n'est nécessaire, les produits solides pouvant être injectés dans le tube 1 par un pompage ou une aspiration, qu'ils soient secs ou présents dès l'origine dans un liquide.

Le dispositif comprend encore un tube de guidage 29, parallèle au tube 1 principal, et destiné à maintenir le train de pistons 2 hors du tube 1.

Le fonctionnement du dispositif sera maintenant décrit. Des pompes mettent le fluide de l'alimentation 8 sous pression et instaurent une circulation, également sous pression, du fluide dans le circuit d'écoulement 21, avec des caractéristiques d'alimentation sous pression permettant de maintenir l'écoulement même si du fluide est prélevé dans chaque chambre 5 pour maintenir sa pression. Un dispositif moteur et d'entraînement 61 déplace la chaîne 3 et les pistons 2, en leur faisant parcourir l'intérieur du tube 1 de l'entrée 13 à la sortie 30. Les pistons 2 présents dans le tube 1 divisent donc son volume intérieur en chambres 5 consécutives, hermétiquement séparées. Les chambres 5 passent d'abord sous le piquage d'alimentation en produits solides 27 et sont alimentés en les produits solides 31 à l'état divisé. Elles passent ensuite successivement par chacun des piquages d'alimentation 6 et reçoivent donc le fluide provenant de l'alimentation 8, à des pressions toujours plus importantes, redevables à l'action des clapets tarés 12. L'espacement des piquages d'alimentation 6, comme d'ailleurs celui des piquages d'évent 14, est approximativement égal à la longueur des chambres 5, de manière que chacune d'elle donne sur un piquage 6 ou 14 unique.

Les chambres 5 sont donc emplies d'un mélange de fluide à une pression maximale, proche de celle de la pression à l'alimentation 8, et des solides divisés 31, en quittant le réseau de distribution 7. Elles arrivent alors au circuit d'écoulement 23, dont le fluide est porté à une haute pression semblable ou à peu près à celle de l'alimentation 8. A cette portion centrale 20 du tube 1, chacune des chambres 5 est en communication avec deux piquages : un piquage 24 ou le piquage d'alimentation d'écoulement 22 d'une part, et un piquage 25 ou le piquage d'évacuation d'écoulement 23 d'autre part. Ces deux piquages de chacune des chambre 5 sont opposés. Avec cette disposition, l'écoulement du fluide forme un courant transversal dans chacune des chambres 5 concernées, en passant par les conduits 26 de dérivation. La conséquence principale des courants que l'écoulement forme à travers les chambres 5 vers l'entrée 13 est que les produits solides 31 sont refoulés dans le tube 1 et les conduits de dérivation 26, puis dans le piquage d'évacuation d'écoulement 23, où ils sont incorporés à l'écoulement du fluide permettant un lavage à contre-courant des chambres 5 en même temps que le transfert du fluide de manière isobare. Les chambres 5 qui dépassent le piquage d'alimentation d'écoulement 22 sont normalement dépourvues des produits solides 31 emplies de fluide. En arrivant aux piquages d'évent 14, la pression dans les chambres 5 baisse par échelons, jusqu'à un piquage final, portant la référence 32, qui permet la vidange des chambres 5, le retour complet du fluide à la recette 15 et la mise en oeuvre d'une dépressurisation.

Ce fonctionnement permet donc d'incorporer sans difficulté les solides divisés 31 à un fluide sous pression et à les traiter de façon continue en évitant la réalisation d'une étanchéité dynamique unique devant supporter un fort gradient de pression.

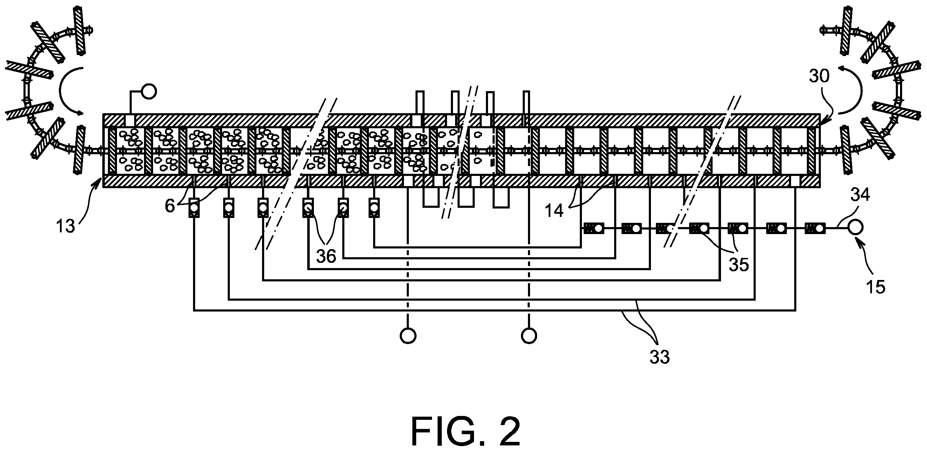

Une variante de conception est représentée à la figure 2. Les réseaux 7 et 16 sont supprimés, de même que l'alimentation en fluide 8. Les piquages d'alimentation 6 sont chacun reliés à un des piquages d'évent 14 par une canalisation 33 autonome selon une disposition où les piquages 6 proches de l'entrée 13 sont reliés à des piquages 14 d'autant proches de la sortie 30. Les canalisations 33 sont toutefois reliées entre elles par une canalisation commune 34, qui mène à la recette 15 ; des clapets tarés 35 sont disposés sur la canalisation commune 34 entre chaque paire de canalisations 33.

En arrivant à chacun des piquages d'évent 14, les chambres 5 perdent comme précédemment une partie de leur pression par un écoulement dans la canalisation 33 correspondante, en fonction des réglages des clapets tarés 35. La pression résiduelle est communiquée à la chambre 5, du côté de l'entrée 13, qui est desservie par cette même canalisation 33. Des clapets anti-retour 36 sont prévus sur les canalisations 33 pour éviter des pertes de pression dans ces chambres 5, proches de l'entrée 13. Le reste du dispositif est inchangé. Cette variante de réalisation est praticable avec une alimentation en fluide suffisante des chambres 5 proches de l'entrée 13, par exemple en même temps que les produits solides 31. Dans ces deux variantes de réalisation, le tube 1 peut être entouré d'échangeurs de chaleur non représentés, s'il convient d'échauffer ou de refroidir le fluide comprimé, puis détendu : une telle disposition peut trouver intérêt dans certains procédés où des conditions isothermes doivent être respectées, comme dans certains procédés où le fluide est gazeux.

Le dispositif assure la mise sous pression du fluide en recourant seulement à des mouvements petits et réguliers des pistons 2, qui entraînent peu d'abrasion et d'usure du tube 1 et des joints 4 par les produits solides 31. L'équilibre statique de la chaîne 3 porteuse des pistons 2 est aussi maintenu, ce qui permet de la déplacer avec peu d'effort.

On se rapporte aux figures suivantes 3 à 6 pour découvrir certains schémas d'intégration du dispositif de l'invention, portant la référence 40, dans des appareillages conçus pour des procédés industriels.

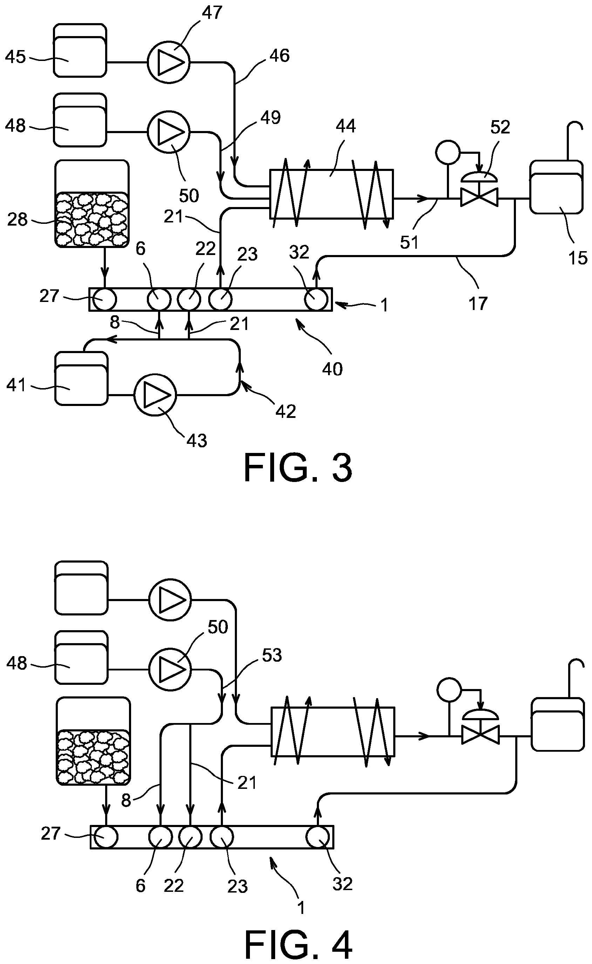

Dans la réalisation de la figure 3, le fluide utilisé pour mettre les produits solides 31 en suspension est d'abord contenu dans un réservoir 41, et mis en mouvement dans une canalisation en boucle 42 par une pompe 43 ; l'alimentation 8 et le circuit d'écoulement 21 sont des embranchements de la canalisation en boucle 42. Le circuit d'écoulement 21 aboutit à un réacteur 44, apte à conduire une réaction continue. Il est alimenté également en un fluide réactif, contenu originellement dans un réservoir 45, par une canalisation 46 munie d'une pompe 47, et en un fluide de maintien de pressurisation, qui est de même contenu originellement dans un réservoir 48, par une canalisation 49, munie d'une pompe 50. Plusieurs fluides réactifs peuvent être présents et alimentés de la même façon. Le réacteur 44 est muni d'une canalisation d'effluents 51, qui aboutit à la recette 15 de même que la canalisation principale 17 du réseau d'évacuation 16. Un déversoir 52 est établi sur la canalisation d'effluents 51 pour s'ouvrir seulement quand la pression exigée dans le réacteur 44 est atteinte.

Dans le mode de réalisation de la figure 4, la canalisation en boucle 42 est omise, et l'entraînement des produits solides 31 est assuré par un des fluides intervenant directement dans le procédé, par exemple le fluide formant le milieu pressurisé. Le réservoir 48 est alors muni d'un exutoire différent, sous forme d'une canalisation 53, qui remplace la canalisation 49 et aboutit à l'alimentation 8 et au circuit d'écoulement 21. Le fluide parvient donc au réacteur 44 par l'intermédiaire du tube 1.

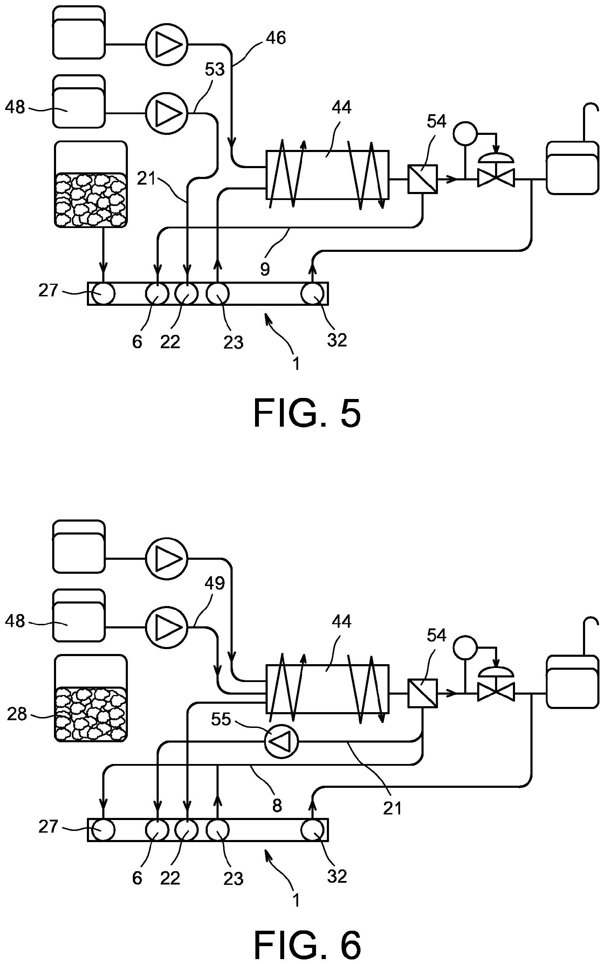

Dans la réalisation de la figure 5, la canalisation 53 constitue seulement l'amorce du circuit d'écoulement 21, et une partie de l'effluent du procédé est recyclée pour servir à l'alimentation en fluide 8 : un séparateur 54 entre les liquides et les solides est pour cela disposé sur la canalisation d'effluents 51 en aval du réacteur 44, et détourne une partie de l'effluent liquide vers les piquages d'alimentation 6 par la canalisation principale 9.

Le mode de réalisation de la figure 6 ressemble à celui de la figure 3 en ce que le réservoir 48 a son contenu qui aboutit au réacteur 44 par l'intermédiaire de la canalisation 49. On retrouve le séparateur 54 de la réalisation de la figure 5, dont la canalisation de sortie comprend encore le circuit d'écoulement 21, animé par une pompe 55.

Parmi les applications possibles de l'invention, on citera :
- les procédés mettant en jeu une lixiviation ou une imprégnation de solides divisés, par exemple dans le CO₂ supercritique ;
- les procédés mettant en jeu un nettoyage sous pression de solides divisés, par exemple aussi dans le CO₂ supercritique ;
- les procédés mettant en jeu une réaction sous pression de précurseurs organiques pour la synthèse de matériaux dans le CO₂ supercritique ou l'eau supercritique ;
- les procédés mettant en jeu une réaction sous pression de matières premières solides naturelles ou artificielles dans le cas, par exemple, de traitement de résines échangeuses d'ions (liquéfaction ou gazéification dans l'eau sous-critique ou supercritique, destruction de déchets solides par oxydation hydrothermale dans l'eau sous-critique ou supercritique) ;
- le dépôt en surface, par exemple sur des monolithes macroporeux, de solides divisés de matériau produits sous pression, par exemple dans l'eau supercritique ou le CO₂ supercritique, comme la fabrication et la mise en forme en une étape de catalyseurs.

L'énergie mécanique des effluents peut être récupérée en tout ou partie pour contribuer à réduire la dépense d'énergie nécessaire à l'alimentation du procédé.

## Revendications

1. Dispositif pour alimenter ou soutirer en continu un fluide sous pression contenant des solides divisés, comprenant un tube (1), un train de pistons (2), reliés entre eux par une chaîne (3) et coulissant dans le tube de façon étanche, le tube comprenant des alimentations (6) du fluide réparties d'une entrée (13) du tube à une portion centrale (20) du tube et échelonnées à des pressions croissantes vers la portion centrale, des évents du fluide répartis de la portion centrale du tube à une sortie du tube, opposée à l'entrée, et échelonnés à des pressions décroissantes vers la sortie, une alimentation (27) des solides divisés (31) à l'entrée (13) du tube (1), et un circuit d'écoulement (21) du fluide sous pression, le circuit d'écoulement (21) passant à travers le tube (1) à la portion centrale (20) en y débouchant par une alimentation d'écoulement (22) et une évacuation d'écoulement (23) communiquant entre elles quand le train de pistons (2) est présent dans le tube, le circuit d'écoulement (21) comportant aussi une évacuation des solides divisés (31).

2. Dispositif pour alimenter ou soutirer un fluide sous pression en solides divisés selon la revendication 1, **caractérisé en ce que** les alimentations (6) du fluide appartiennent à des embranchements (10) d'un réseau de distribution de fluide (7) menant à une source (8) du fluide sous pression et muni de détendeurs (12) tarés à des pressions différentes.

3. Dispositif pour alimenter ou soutirer un fluide sous pression en solides divisés selon la revendication 2, **caractérisé en ce que** les détendeurs (12) sont disposés en série sur une même canalisation (9) du réseau de distribution de fluide (7), et les embranchements se raccordent à la canalisation entre les détendeurs.

4. Dispositif pour alimenter ou soutirer un fluide en solides divisés selon la revendication 1, **caractérisé en ce que** le tube (1) comprend des évents (14) du fluide répartis de la portion centrale (20) du tube à une sortie du tube, opposée à l'entrée, et échelonnées à des pressions décroissantes vers la sortie.

5. Dispositif pour alimenter ou soutirer un fluide sous pression en solides divisés selon la revendication 4, **caractérisé en ce que** les évents des fluides appartiennent à des embranchements (18) d'un réseau d'évacuation du fluide (16) menant à une recette (15) du fluide basse pression et munis de détendeurs (19) tarés à des pressions différentes.

6. Dispositif pour alimenter ou soutirer un fluide sous pression en solides divisés selon la revendication 5, **caractérisé en ce que** les détendeurs (19) sont disposés en série sur une même canalisation (17) du réseau d'évacuation de fluide (16), et les embranchements se raccordent à la canalisation entre les détendeurs.

7. Dispositif pour alimenter ou soutirer un fluide sous pression en solides divisés selon l'une quelconque des revendications 4 à 6, **caractérisé en ce que** les alimentations (6) du fluide communiquent respectivement avec les évents (14) du fluide.

8. Dispositif pour alimenter ou soutirer un fluide sous pression en solides divisés selon l'une quelconque des revendications 1 à 7, **caractérisé en ce que** la chaîne (3) est agencée en une boucle sans fin, et les pistons (2) sont répartis à un pas uniforme le long de la chaîne.

9. Dispositif pour alimenter ou soutirer un fluide sous pression en solides divisés selon l'une quelconque des revendications 1 à 8, **caractérisé en ce que** le tube (2) est muni de conduits (26) de dérivation successifs entre l'alimentation d'écoulement (22) et d'évacuation d'écoulement (23).

10. Dispositif pour alimenter ou soutirer un fluide sous pression en solides divisés selon l'une quelconque des revendications 1 à 9, **caractérisé en ce que** les alimentations (6) du fluide et/ou les évents (14) du fluide sont disposés à distances régulières le long du tube, et les pistons (52) sont distants des mêmes distances régulières le long de la chaîne (3).

## Claims

1. Device for continuously feeding or extracting a pressurised fluid containing divided solids, comprising a tube (1), a string of pistons (2), connected together by a chain (3) and sliding in the tube sealingly, the tube comprising fluid feeds (6) distributed from an inlet (13) of the tube to a central portion (20) of the tube and staged at increasing pressures towards the central portion, vents for the fluid distributed from the central portion of the tube to an outlet of the tube, opposite to the inlet, and staged at decreasing pressures towards the outlet, a feed (27) of the divided solids (31) at the inlet (13) of the tube (1), and a circuit (21) for flow of the pressurised fluid, the flow circuit (21) passing through the tube (1) at the central portion (20), emerging therefrom through a flow feed (22) and a flow discharge (23) communicating with each other when the string of pistons (2) is present in the tube, the flow discharge (21) also comprising a discharge of the divided solids (31).

2. Device for feeding or drawing off a pressurised fluid containing divided solids according to claim 1, **characterised in that** the feeds (6) for the fluid form part of branches (10) of a fluid-distribution network (7) leading to a source (8) of the pressurised fluid and provided with pressure reducers (12) calibrated at different pressures.

3. Device for feeding or drawing off a pressurised fluid containing divided solids according to claim 2, **characterised in that** the pressure reducers (12) are disposed in series on the same duct (9) of the fluid-distribution network (7), and the branches are connected to the duct between the pressure reducers.

4. Device for feeding or drawing off a fluid containing divided solids according to claim 1, **characterised in that** the tube (1) comprises vents (14) for the fluid distributed from the central portion (20) of the tube to an outlet of the tube, opposite to the inlet, and staged at decreasing pressures towards the outlet.

5. Device for feeding or drawing off a pressurised fluid containing divided solids according to claim 4, **characterised in that** the vents for the fluids form part of branches (18) of a network (16) for discharging the fluid, leading to a receiver (15) for the low-pressure fluid and provided with pressure reducers (19) calibrated at different pressures.

6. Device for feeding or drawing off a pressurised fluid containing divided solids according to claim 5, **characterised in that** the pressure reducers (19) are disposed in series on the same duct (17) in the fluid-discharge network (16), and the branches are connected to the duct between the pressure reducers.

7. Device for feeding or drawing off a pressurised fluid containing divided solids according to any of claims 4 to 6, **characterised in that** the feeds (6) for the fluid communicate respectively with the vents (14) for the fluid.

8. Device for feeding or drawing off a pressurised fluid containing divided solids according to any of claims 1 to 7, **characterised in that** the chain (3) is arranged in an endless loop, and the pistons (2) are distributed at a uniform pitch along the chain.

9. Device for feeding or drawing off a pressurised fluid containing divided solids according to any of claims 1 to 8, **characterised in that** the tube (2) is provided with successive bypass pipes (26) between the flow feed (22) and the flow discharge (23).

10. Device for feeding or drawing off a pressurised fluid containing divided solids according to any of claims 1 to 9, **characterised in that** the feeds (6) for the fluid and/or the vents (14) for the fluid are disposed at regular distances along the tube, and the pistons (52) are distant by the same regular distances along the chain (3).

## Patentansprüche

1. Vorrichtung zum kontinuierlichen Zu- bzw. Abführen eines Druckfluids mit geteilten Feststoffen, enthaltend ein Rohr (1), eine Folge von Kolben (2), die über eine Kette (3) miteinander verbunden sind und in dem Rohr abgedichtet gleiten, wobei das Rohr Fluidzuleitungen (6), die von einem Rohreinlass (13) bis zu einem Mittelabschnitt (20) des Rohrs verteilt und mit zum Mittelabschnitt hin ansteigenden Druckwerten gestuft angeordnet sind, Fluidableitungen, die von dem Mittelabschnitt des Rohrs zu einem dem Einlass entgegengesetzten Rohrauslass verteilt und mit zum Auslass hin absteigenden Druckwerten gestuft angeordnet sind, eine Zuleitung (27) für geteilte Feststoffe (31) am Einlass (13) des Rohrs (1), und einen Strömungskreis (21) für das Druckfluid aufweist, wobei der Strömungskreis (21) durch das Rohr (1) hindurch zum Mittelabschnitt (20) verläuft und dabei über eine Strömungszuleitung (22) und eine Strömungsableitung (23) mündet, die miteinander verbunden sind, wenn die Kolbenfolge (2) in dem Rohr vorhanden ist, wobei der Strömungskreis (21) auch eine Ableitung von geteilten Feststoffen (31) aufweist.

2. Vorrichtung zum Zu- bzw. Abführen eines Druckfluids mit geteilten Feststoffen nach Anspruch 1, **dadurch gekennzeichnet, dass** die Fluidzuleitungen (6) zu den Verzweigungen (10) eines Fluidverteilnetzes (7) gehören, das zu einer Druckfluidquelle führt und mit Druckminderern (12) versehen ist, die auf unterschiedliche Druckwerte eingestellt sind.

3. Vorrichtung zum Zu- bzw. Abführen eines Druckfluids mit geteilten Feststoffen nach Anspruch 2, **dadurch gekennzeichnet, dass** die Druckminderer (12) in Reihe auf einer gleichen Leitung (9) des Fluidverteilnetzes (7) angeordnet sind und die Verzweigungen sich an die Leitungen zwischen den Druckminderern anschließen.

4. Vorrichtung zum Zu- bzw. Abführen eines Druckfluids mit geteilten Feststoffen nach Anspruch 1, **dadurch gekennzeichnet, dass** das Rohr (1) Fluidableitungen (14) enthält, die von dem Mittelabschnitt (20) des Rohrs bis zum dem Einlass entgegengesetzten Rohrauslass verteilt und mit abnehmenden Druckwerten zum Auslass hin gestuft angeordnet sind.

5. Vorrichtung zum Zu- bzw. Abführen eines Druckfluids mit geteilten Feststoffen nach Anspruch 4, **dadurch gekennzeichnet, dass** die Fluidableitungen zu Verzweigungen (18) eines Fluidabführnetzes (16) gehören, die zu einer Abgabestelle (6) des Niederdruckfluids führen und mit Druckminderern (19) versehen sind, die auf verschiedene Druckwerte eingestellt sind.

6. Vorrichtung zum Zu- bzw. Abführen eines Druckfluids mit geteilten Feststoffen nach Anspruch 5, **dadurch gekennzeichnet, dass** die Druckminderer (19) in Reihe an einer gleichen Leitung (17) des Fluidabführnetzes (16) angeordnet sind und die Verzweigungen sich an die Leitung zwischen den Druckminderern anschließen.

7. Vorrichtung zum Zu- bzw. Abführen eines Druckfluids mit geteilten Feststoffen nach einem der Ansprüche 4 bis 6, **dadurch gekennzeichnet, dass** die Fluidzuleitungen (6) mit den jeweiligen Fluidableitungen (14) verbunden sind.

8. Vorrichtung zum Zu- bzw. Abführen eines Druckfluids mit geteilten Feststoffen nach einem der Ansprüche 1 bis 7, **dadurch gekennzeichnet, dass** die Kette (3) als Endlosschleife vorgesehen ist und die Kolben (2) mit einer einheitlichen Teilung entlang der Kette verteilt sind.

9. Vorrichtung zum Zu- bzw. Abführen eines Druckfluids mit geteilten Feststoffen nach einem der Ansprüche 1 bis 8, **dadurch gekennzeichnet, dass** das Rohr (2) mit aufeinanderfolgenden Umgehungsleitungen (26) zwischen der Strömungszuleitung (22) und der Strömungsableitung (23) versehen ist.

10. Vorrichtung zum Zu- bzw. Abführen eines Druckfluids mit geteilten Feststoffen nach einem der Ansprüche 1 bis 9, **dadurch gekennzeichnet, dass** die Fluidzuleitungen (6) und/oder die Fluidableitungen (14) in gleichmäßigen Abständen entlang des Rohrs angeordnet sind und die Kolben (52) um die gleichen gleichmäßigen Abstände entlang der Kette (3) beabstandet sind.
